# EUROPÄISCHE PATENTSCHRIFT

(11) **EP 3 510 320 B1**
(45) Veröffentlichungstag und Bekanntmachung des Hinweises auf die Patenterteilung: **20.04.2022**
(21) Anmeldenummer: 17739179.4
(22) Anmeldetag: 26.06.2017
(51) Int. Cl.: F21S 41/147, F21S 41/16, F21S 41/40, F21S 41/675, G02B 26/08, G02B 5/02, F21S 41/14

(54) **FAHRZEUGSCHEINWERFER**
VEHICLE HEADLIGHT
PROJECTEUR DE VÉHICULE

(30) Priorität: 08.09.2016 AT 507912016
(43) Veröffentlichungstag der Anmeldung: 17.07.2019
(73) Patentinhaber: ZKW Group GmbH, 3250 Wieselburg (AT)
(72) Erfinder: REISINGER, Bettina, 3300 Amstetten (AT); PÜRSTINGER, Josef, 4540 Bad Hall (AT); DANNER, Markus, 2252 Ollersdorf (AT)
(74) Vertreter: Patentanwaltskanzlei Matschnig & Forsthuber OG
(86) Internationale Anmeldenummer: PCT/AT2017/060158
(87) Internationale Veröffentlichungsnummer: WO 2018/045402

(56) Entgegenhaltungen:
- EP-A1- 1 804 110
- WO-A1-2011/134513
- DE-A1-102014 208 340
- DE-T5-112013 003 050
- US-A1- 2007 024 549
- US-A1- 2015 092 435
- US-A1- 2015 211 703
- US-A1- 2015 219 302

## Beschreibung

Die Erfindung betrifft einen Fahrzeugscheinwerfer, umfassend zumindest eine Lichtquelleneinheit, zumindest einen steuerbaren Reflektor, zumindest eine optisch transparente Abdeckung, zumindest eine optische Absorbereinrichtung, zumindest ein optisches Abschattungselement, und zumindest eine Projektionsoptik,
wobei die Lichtquelleneinheit eingerichtet ist Licht zu emittieren und in eine erste Ausbreitungsrichtung zu leuchten, in deren Strahlengang der steuerbare Reflektor angeordnet ist, und der steuerbare Reflektor das Licht in eine zweite Ausbreitungsrichtung, in deren Strahlengang die Projektionsoptik angeordnet ist und in eine Richtung vor dem Fahrzeug orientiert ist, zumindest teilweise reflektiert, um vor dem Fahrzeug ein Lichtbild auszubilden,
wobei der steuerbare Reflektor eine Anordnung einer Vielzahl von steuerbaren Einzelspiegeln, deren reflektierende Oberflächen in einem nicht verkippten Zustand plan in einer ersten Ebene und als rechteckförmige Matrix von Einzelspiegeln angeordnet sind, umfasst,
wobei das von der Lichtquelleneinheit emittierte Licht in der ersten Ausbreitungsrichtung auf den steuerbaren Reflektor fällt und von diesem einem ersten angesteuerten Zustand in Richtung der zweiten Ausbreitungsrichtung reflektiert wird und/ oder in einem zweiten angesteuerten Zustand des steuerbaren Reflektors in eine dritte Ausbreitungsrichtung, reflektiert wird, und
die optisch transparente Abdeckung, in einer zweiten Ebene zwischen der Lichtquelleneinheit und dem steuerbaren Reflektor derart angeordnet ist, dass Licht in der ersten Ausbreitungsrichtung und in der zweiten Ausbreitungsrichtung die optisch transparente Abdeckung durchdringt.

Bei der Entwicklung der gegenwärtigen Scheinwerfersysteme steht immer mehr der Wunsch im Vordergrund, ein möglichst hochaufgelöstes, homogenes Lichtbild auf die Fahrbahn projizieren zu können. Der Begriff "Fahrbahn" wird hier zur vereinfachten Darstellung verwendet, denn selbstverständlich hängt es von den örtlichen Gegebenheiten ab, ob sich ein Lichtbild tatsächlich auf der Fahrbahn befindet oder auch darüber hinaus erstreckt. Prinzipiell wird das Lichtbild im hier verwendeten Sinn anhand einer Projektion auf eine vertikale Fläche entsprechend der einschlägigen Normen, die sich auf die KFZ-Beleuchtungstechnik beziehen, definiert. Ferner soll das erzeugte Lichtbild an unterschiedliche Verkehrssituationen anpassbar sein.

Um dem genannten Bedürfnis zu entsprechen, wurden unter anderem Scheinwerfer entwickelt, in denen eine variabel ansteuerbare Reflektorfläche aus einer Mehrzahl von Mikrospiegeln gebildet ist und auf gewählte Bereiche eine Lichtemission, die von einer Lichtquelleneinheit erzeugt wird, in Abstrahlrichtung des Scheinwerfers reflektiert. Derartige Leuchteinrichtungen sind im Fahrzeugbau wegen ihrer sehr flexiblen Lichtfunktionen vorteilhaft, da für unterschiedliche Leuchtbereiche die Beleuchtungsstärke individuell geregelt werden kann und beliebige Lichtfunktionen mit unterschiedlichen Lichtverteilungen realisiert werden können, wie beispielsweise eine Abblendlicht-Lichtverteilung, eine Abbiegelicht-Lichtverteilung, eine Stadtlicht-Lichtverteilung, eine Autobahnlicht-Lichtverteilung, eine Kurvenlicht-Lichtverteilung, eine Fernlicht-Lichtverteilung, eine Zusatzfernlicht-Lichtverteilung oder zur Ausbildung von blendfreiem Fernlicht (auch bekannt als Adaptive Driving Beam Headlighting System, ADB).

Aus US 2015/092435 A1 und DE 10 2014 208340 A1 sind Scheinwerfer mit Mikrospiegelanordnungen bekannt.

Für die Mikrospiegelanordnung kommt die sogenannte Digital Light Processing (DLP^{®}) Projektionstechnik zur Anwendung, bei der Bilder dadurch erzeugt werden, dass ein digitales Bild auf einen Lichtstrahl aufmoduliert wird. Dabei wird durch eine rechteckige Anordnung von beweglichen Mikrospiegeln, auch als Pixel bezeichnet, der Lichtstrahl in Teilbereiche zerlegt und anschließend pixelweise entweder in den Projektionsweg hinein oder aus dem Projektionsweg hinaus reflektiert. Basis für diese Technik bildet ein elektronisches Bauteil, das eine Anordnung von Mikrospiegeln in Form einer Matrix von Spiegeln und deren Ansteuerungstechnik enthält und als "Digital Micromirror Device" (DMD) bezeichnet wird. Bei einem DMD-Mikrosystem handelt es sich um einen Flächenlichtmodulator (Spatial Light Modulator, SLM), der aus matrixförmig angeordneten Mikrospiegelaktoren, das heißt verkippbaren spiegelnden Flächen besteht, beispielsweise mit einer Kantenlänge von etwa 16 µm oder auch darunter. Die Spiegelflächen sind derart konstruiert, dass sie durch die Einwirkung elektrostatischer Felder beweglich sind. Jeder Mikrospiegel ist in seinem Kippwinkel einzeln verstellbar und weist in der Regel zwei stabile Endzustände auf, zwischen denen innerhalb einer Sekunde bis zu 5000 mal gewechselt werden kann. Die einzelnen Mikrospiegel können jeweils beispielsweise durch eine Pulsweiten-Modulation (PWM) angesteuert werden, um in der Hauptstrahlrichtung der DMD-Anordnung weitere Zustände der Mikrospiegel abzubilden, deren zeitlich gemittelte Reflektivität zwischen den beiden stabilen Zuständen des DMD liegt. Die Anzahl der Spiegel entspricht der Auflösung des projizierten Bilds, wobei ein Spiegel ein oder mehrere Pixel darstellen kann. Mittlerweile sind DMD-Chips mit hohen Auflösungen im Megapixel-Bereich erhältlich. Den verstellbaren Einzelspiegeln zugrunde liegende Technologie ist die Micro-Electro-Mechanical-Systems-(MEMS) Technologie.

Während die DMD-Technologie zwei stabile Spiegel-Zustände aufweist, und durch Modulation zwischen beiden stabilen Zuständen der Reflexionsfaktor eingestellt werden kann, weist die "Analog Micromirror Device" (AMD) Technologie die Eigenschaft auf, dass die Einzelspiegel in variablen Spiegelpositionen eingestellt werden können, die dort jeweils in einem stabilen Zustand sind.

Wird ein elektronisches Bauteil in DLP^{®}-Technologie in einem Fahrzeugscheinwerfer eingesetzt, so kann es erforderlich sein, das Bauteil gegen äußere Einflüsse wie Feuchtigkeit oder Staub zu schützen. Dies kann durch eine optisch transparente Abdeckung vor dem DLP^{®}-Bauteil geschehen, die beispielsweise aus Glas oder Kunststoff gefertigt ist. Obwohl derartige Abdeckungen häufig mit einer hochwertigen Antireflexionsbeschichtung versehen sind, wird dennoch ein Teil des einfallenden Lichts reflektiert. Daher kann es durch die Oberfläche der optisch transparenten Abdeckung zu unerwünschten Reflexionen kommen, die das von dem Fahrzeugscheinwerfer erzeugte Lichtbild stören können und/ oder den Kontrast im Lichtbild auf der Fahrbahn verschlechtern. Speziell für ADB-Fahrzeugscheinwerfer ist es wichtig, ein möglichst hohes Kontrastverhältnis zu erzielen, um in den beleuchteten Bereichen eine hohe Lichtstärke und dementsprechend eine gute Sicht für den Fahrer des Fahrzeugs zu ermöglichen und gleichzeitig in den ausgeblendeten Segmenten Blendwerte, wie sie z.B. durch die ECE R123 geregelt sind, wo beispielshaft im HV-Punkt eine bestimmte Lichtstärke als Obergrenze bei einer classC-Lichtverteilung festgelegt ist, nicht zu überschreiten, um den Gegenverkehr und/oder vorausfahrende Verkehrsteilnehmer nicht zu blenden.

Es ist Aufgabe der vorliegenden Erfindung, die genannten Nachteile zu überwinden.

Die Aufgabe wird erfindungsgemäß durch einen Fahrzeugscheinwerfer der eingangs genannten Art dadurch gelöst, dass das von der Lichtquelleneinheit emittierte Licht in der ersten Ausbreitungsrichtung auf die optisch transparente Abdeckung fällt und von diesem teilweise in eine vierte Ausbreitungsrichtung reflektiert und in der vierten

Ausbreitungsrichtung von dem optischen Abschattungselement blockiert wird, wobei das Abschattungselement zumindest teilweise im Strahlengang der zweiten Ausbreitungsrichtung und nach der Projektionsoptik angeordnet ist.

Durch die optisch transparente Abdeckung können störende Reflexionen auf deren Unterseite sowie auf deren Oberseite entstehen und in die vierte Ausbreitungsrichtung reflektiert werden.

Durch die erfindungsgemäße Lösung wird erreicht, dass das von dem Abschattungselement reflektierte oder absorbierte Licht von der weiteren Lichtausbreitung in Richtung der zweiten Ausbreitungsrichtung, in der die Projektionsoptik gelegen ist, unterdrückt wird. Durch diese Maßnahme wird der Kontrast des durch die Projektionsoptik vor dem Fahrzeug projizierten Lichtbilds erhöht.

Es ist besonders vorteilhaft, wenn in der dritten Ausbreitungsrichtung eine optische Absorbereinrichtung gelegen ist, mittels welcher das Licht in Wärme konvertiert wird und eine störende Leuchtwirkung innerhalb des Fahrzeugscheinwerfers verhindert beziehungsweise reduziert wird.

Wie bereits erwähnt, liegt der steuerbare Reflektor mit dessen Anordnung einer Vielzahl von steuerbaren Einzelspiegeln mit deren reflektierende Oberflächen im jeweils nicht verkippten Zustand plan in der ersten Ebene und die optisch transparente Abdeckung liegt in der zweiten Ebene.

Es ist besonders vorteilhaft, wenn die zweite Ebene parallel zur ersten Ebene liegt, wodurch eine besonders einfache Anordnung geschaffen werden kann, die Kosten- und Montagevorteile bietet.

Alternativ ist es auch vorteilhaft, wenn die zweite Ebene in einem dritten Winkel zur ersten Ebene liegt, wobei der dritte Winkel größer als 0° und kleiner als 15° ist, bevorzugt größer als 0° und kleiner als 5°. Dadurch wird ein Verbesserung des Lichtbilds erreicht, weil die Reflexionen durch die optisch transparente Abdeckung weiter reduziert werden können, indem der dritte Winkel dafür sorgt, dass die Reflexionen zumindest nur teilweise in die zweite Ausbreitungsrichtung gelenkt werden und nur ein geringerer Anteil durch das optische Abschattungselement im Lichtbild unterdrückt werden muss.

Ist der dritte Winkel größer als 0°, so ist es günstig, wenn sich die Projektionen in der ersten und vierten Ausbreitungsrichtung derart überlappen, dass die Überlappung geringer ist als wenn der dritte Winkel gleich 0° beträgt. Folglich ist der abgeschattete Bereich in der Projektion in der ersten Ausbreitungsrichtung deutlich geringer und die Abbildungsoptik wird dadurch bei gleichem Abbildungsmaßstab (entspricht der Breite der Lichtverteilung) effizienter.

Ferner ist es günstig, wenn das Abschattungselement zumindest teilweise im Strahlengang der zweiten Ausbreitungsrichtung und vor der Projektionsoptik angeordnet ist, was eine kleine Bauform des Fahrzeugscheinwerfers ermöglicht. Zusätzlich ist nur eine geringe Präzision an die Abmessungen und die Position des Abschattungselements von Nöten.

Erfindungsgemäß ist das Abschattungselement zumindest teilweise im Strahlengang der zweiten Ausbreitungsrichtung und nach der Projektionsoptik angeordnet.

Dadurch kann erreicht werden, dass die Abschattungen und die damit einhergehenden optischen Reflexionen oder thermischen Emissionen weit von der optischen Absorbereinrichtung auftreten, was günstig für die Verteilung der thermischen Verluste sein kann.

Die Anordnung des Abschattungselements in Form einer Gesichtsfeldblende kann nach der Projektionsoptik erfolgen, da die Gesichtsfeldblende das durchdringende Strahlenbündel entweder am Ort des Eingangs oder des Ausgangs der Gesichtsfeldblende begrenzt. Beide Orte sind zueinander konjugiert, das heißt, sie sind über die Projektionslinse miteinander verknüpft.

Es ist besonders vorteilhaft wenn das Abschattungselement eine Blende ist, was eine besonders einfache und günstige Bauform erlaubt.

Alternativ ist es vorteilhaft, wenn das Abschattungselement ein weiterer, zusätzlicher optischer Absorber, also ein Abschattungsabsorber ist, insbesondere dann, wenn das abgeschattete Licht direkt am Abschattungselement in Wärme konvertiert werden kann und die optische Absorbereinrichtung des Fahrzeugscheinwerfers folglich nicht zusätzlich erwärmt. Dadurch wird erreicht, dass die optische Absorbereinrichtung des Fahrzeugscheinwerfers kleiner und kostengünstiger dimensioniert und folglich insgesamt eine kleinere Baugröße des Scheinwerfers erreicht werden kann.

Das Abschattungselement beziehungsweise der Abschattungsabsorber und die optische Absorbereinrichtung des Fahrzeugscheinwerfers können aber auch einteilig als ein gemeinsames Bauteil ausgeführt sein, um die Anzahl der in einem Fahrzeugscheinwerfer zu montierenden Komponenten gering zu halten und folglich die Konstruktions-, Montage-, Service- und Bauteilkosten gering zu halten.

Es ist vorteilhaft, wenn das von der Lichtquelleneinheit emittierte Licht in der ersten Ausbreitungsrichtung unter einem ersten Winkel auf die optisch transparente Abdeckung fällt, wobei der erste Winkel in einem Bereich zwischen 50° und 65° liegt, bevorzugt zwischen 55° und 60°. Dadurch wird eine besonders kompakte Bauform erzielt, indem die verwendeten Komponenten eng nebeneinander angeordnet werden können.

In einer besonders günstigen Ausführungsform der Erfindung kann die Lichtquelleneinheit zumindest eine Halbleiter-Lichtquelle, vorzugsweise eine High-Power LED, eine Hochstrom LED oder eine Laserdiode in Verbindung mit einem optischen Konverter ("Phosphor"), und vorzugsweise eine Primäroptik in Form eines optischen Linsensystems umfassen, um eine besonders kostengünstige Anordnung zu schaffen. Halbleiter-Lichtquellen weisen unter anderem einen besonders hohen Wirkungsgrad auf und erzeugen folglich wenig Abwärme, sodass eine zugehörige Kühleinrichtung kostengünstig realisiert werden kann. Auch der Einsatz von plasmabasierten Lichtquellen ist möglich.

Die Erfindung und deren Vorteile werden im Folgenden anhand von nicht einschränkenden Ausführungsbeispielen näher beschrieben, die in den beiliegenden Zeichnungen veranschaulicht sind. Die Zeichnungen zeigen in
- Fig. 1: eine schematische perspektivische Darstellung einer Anordnung von optischen Komponenten für einen Fahrzeugscheinwerfer nach dem Stand der Technik, die einen steuerbaren Reflektor umfasst;
- Fig. 2: eine schematische Darstellung des Funktionsprinzips einer nicht erfindungsgemäßen Anordnung in einer ersten Konfiguration, umfassend einen steuerbaren Reflektor;
- Fig. 3 e: ine schematische Darstellung des Funktionsprinzips einer nicht erfindungsgemäßen Anordnung in einer zweiten Konfiguration, umfassend einen steuerbaren Reflektor mit einer optisch transparenten Abdeckung in einer ersten Winkelstellung;
- Fig. 4: eine schematische Darstellung des Funktionsprinzips einer nicht erfindungsgemäßen Anordnung in einer dritten Konfiguration, umfassend einen steuerbaren Reflektor mit einer optisch transparenten Abdeckung in der ersten Winkelstellung;
- Fig. 5: eine schematische Darstellung des Funktionsprinzips einer nicht erfindungsgemäßen Anordnung;
- Fig. 6: eine schematische Darstellung des Funktionsprinzips einer erfindungsgemäßen Anordnung in einer vierten Konfiguration, umfassend einen steuerbaren Reflektor mit einer optisch transparenten Abdeckung in einer ersten Winkelstellung;
- Fig. 7: eine schematische Darstellung des Funktionsprinzips nicht erfindungsgemäßen Anordnung in einer fünften Konfiguration, umfassend einen steuerbaren Reflektor mit einer optisch transparenten Abdeckung in einer zweiten Winkelstellung;
- Fig. 8: eine nicht erfindungsgemäß Ausführungsform einer Projektionslinse mit Blende;
- Fig. 9a: eine Lichtverteilung, wie sie durch einen Fahrzeugscheinwerfer in DLP^{®}-Technologie nach dem Stand der Technik erzeugt wird;
- Fig. 9b: eine Intensitätsverteilung im Schnitt A-A nach Fig. 9a;
- Fig. 10a: eine Lichtverteilung, wie sie durch einen erfindungsgemäßen Fahrzeugscheinwerfers erzeugt wird;
- Fig. 10b: eine Intensitätsverteilung im Schnitt B-B nach Fig. 10a.

Unter Bezugnahme auf die Figuren werden nun Ausführungsbeispiele näher erläutert. Insbesondere sind für die Erfindung in einem Scheinwerfer wichtige Teile dargestellt, wobei klar ist, dass ein Scheinwerfer noch viele andere, nicht gezeigte Teile enthält, die einen sinnvollen Einsatz in einem Kraftfahrzeug, wie insbesondere einem PKW oder Motorrad, ermöglichen. Der Übersichtlichkeit halber sind daher beispielsweise Kühlvorrichtungen für Bauteile, Ansteuerungselektronik, weitere optische Elemente, mechanische Verstelleinrichtungen beziehungsweise Halterungen nicht gezeigt. In anderen, nicht gezeigten Ausführungsbeispielen können mehrere der erläuterten Komponenten innerhalb eines Scheinwerfers eingesetzt werden.

In der weiteren Beschreibungen bezieht sich der Begriff unterschiedlicher "Konfigurationen" auf die geometrische Anordnung verschiedener Komponenten untereinander betreffend Dimensionen, Abstände und Winkelstellungen.

Der Begriff unterschiedlicher "Winkelstellung einer optisch transparenten Abdeckung" bezieht sich auf die Anordnung einer transparenten Abdeckung in Relation zu einem steuerbaren Reflektor betreffend Dimensionen, Abständen und Winkelstellungen.

In der folgenden Beschreibung der Figuren wird der Bezug auf Ausbreitungsrichtungen gemacht, wobei klar ist, dass damit alle Lichtstrahlanteile eines emittierten Lichts gemeint sind, deren optische Achse in der jeweilig bezeichneten Ausbreitungsrichtung oder auch parallel dazu verläuft.

Es ist dem Fachmann bekannt, dass die dargestellten Anordnungen mit ideal angenommenen Dimensionen, Abstände und Winkelstellungen skizziert sind, wobei in einer praktischen Umsetzung Abweichungen davon berücksichtigt werden müssen. Dies betrifft ebenso den realen Verlauf von Lichtstrahlanteilen, der Abweichungen vom idealen, parallelen Verlauf aufweisen kann, was beispielsweise durch die praktische Ausführung optischer Elemente wie Linsen oder Reflektoren verursacht werden kann.

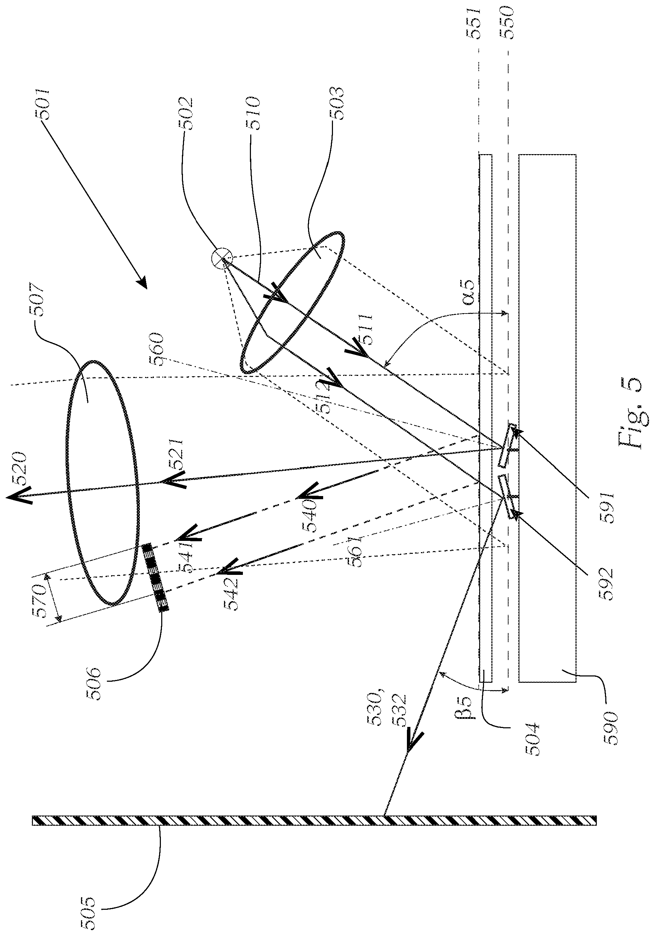

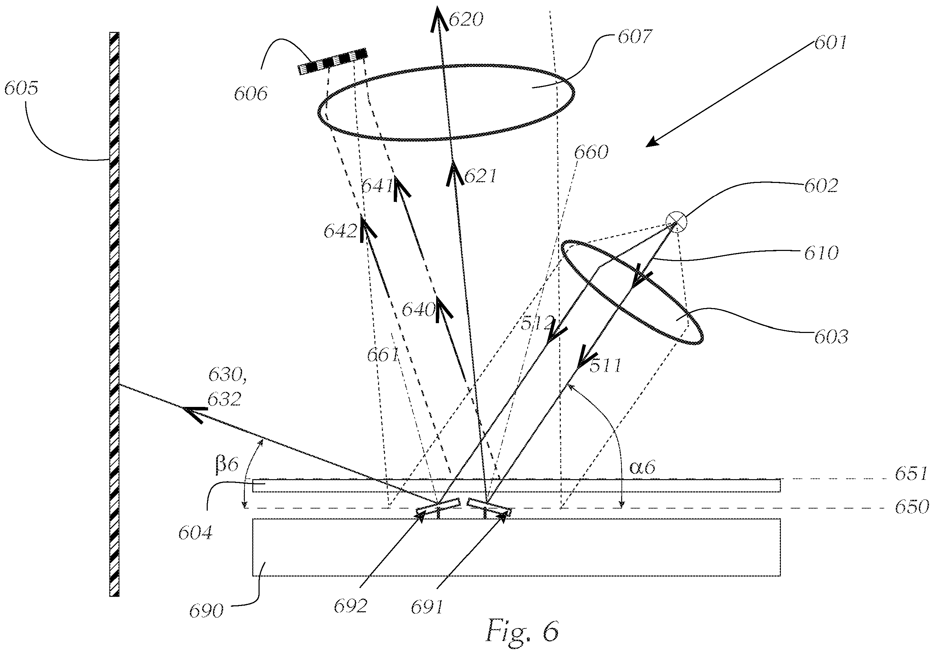

Die dargestellten Figuren zeigen einzelne Ausführungsformen der Erfindung, wobei die gezeigten Ausführungsformen die Erfindung und deren Schutzumfang gemäß der beiliegenden Ansprüche nicht einschränken. Damit ist auch gemeint, dass die einzelnen gezeigten Ausführungsformen untereinander beliebig kombiniert werden können und dabei Gegenstand des Schutzumfangs der beiliegenden Ansprüche bilden. So ist beispielsweise die Ausführungsform nach Fig. 5 mit jener nach Fig. 6 kombinierbar und auch Gegenstand des Schutzbereichs der beiliegenden Ansprüche. Die für einzelne Figuren diskutierten Ausführungen und deren Vorteile gelten demzufolge für alle Ausführungsformen.

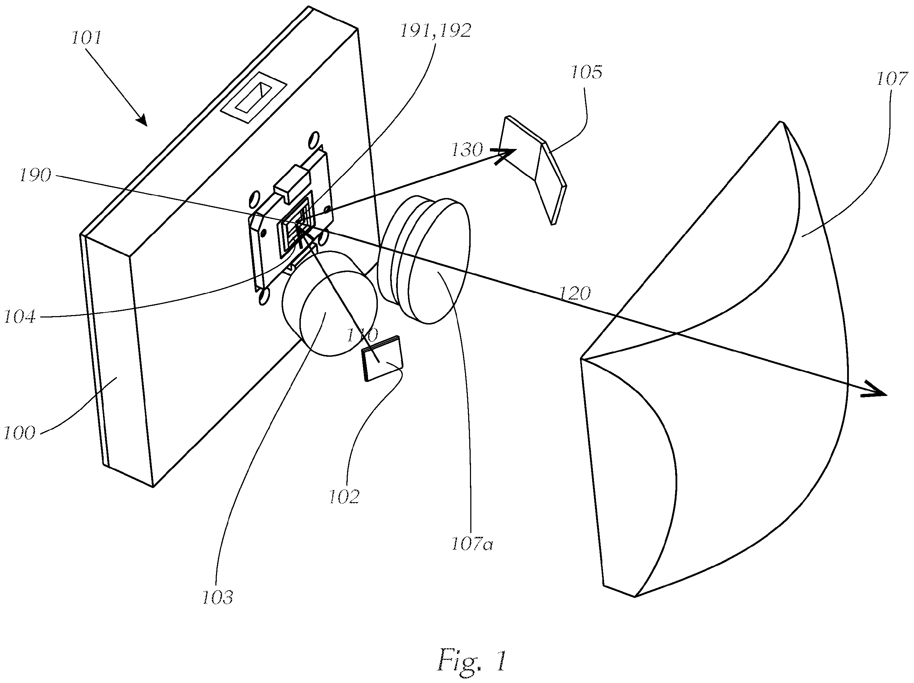

In **Fig. 1** ist schematisch eine perspektivische Darstellung einer Anordnung eines Fahrzeugscheinwerfers 101 nach dem Stand der Technik gezeigt, die eine Lichtquelleneinheit 102, eine Primäroptik 103, einen steuerbaren Reflektor 190, der in einem Elektronikgehäuse 100 untergebracht ist, eine optisch transparente Abdeckung 104, eine optische Absorbereinrichtung 105 und eine Projektionsoptik 107, 107a umfasst.

Die Lichtquelleneinheit 102 umfasst eine Lichtquelle, die Licht zumindest in die erste Ausbreitungsrichtung 110 emittiert. Die erste Ausbreitungsrichtung 110 verläuft ausgehend von der Lichtquelleneinheit 102 beziehungsweise der enthaltenen Lichtquelle durch die Primäroptik 103 zum steuerbaren Reflektor 190, der eine Vielzahl steuerbarer Einzelspiegel 191, 192 umfasst. Der steuerbare Reflektor 190 ist mit einer Steuerelektronik verbunden, die den steuerbaren Reflektor 190 ansteuert und beispielsweise in dem Elektronikgehäuse 100 angeordnet ist und neben der Stromversorgung auch für eine entsprechende Kühlung des steuerbaren Reflektors 190 sorgen kann. Damit der steuerbare Reflektor 190 gemäß seiner optischen Aufgabe das Licht modulieren kann, ragt dieser durch eine Aussparung aus dem Elektronikgehäuse 100 und ist so für die weiteren optischen Komponenten zugänglich, um mit diesen zusammenzuwirken.

Die Primäroptik 103 sowie die Projektionsoptik 107, 107a können mehrteilig beziehungsweise mehrstufig ausgeführt sein, um an die jeweiligen Abbildungserfordernisse angepasst zu sein. Außerdem kann die Primäroptik 103 Teil der Lichtquelleneinheit 102 sein, um beispielsweise eine gemeinsame Montagevorrichtung zu nutzen oder einfacher justierbar zu sein. Alternativ kann die Primäroptik als strahlformendendes Spiegelsystem ausgeführt sein. Mit anderen Worten ist es ebenso möglich, dass die erste Ausbreitungsrichtung nicht geradlinig von einer Lichtquelleneinheit durch optische Linsen einer Primäroptik zu einem steuerbaren Reflektor führt. Beispielsweise kann das Licht über einen gekrümmten Spiegel umgelenkt werden.

Der steuerbare Reflektor 190 ist eingerichtet in einem ersten angesteuerten Zustand zumindest teilweise das Licht in eine zweite Ausbreitungsrichtung 120, in der eine Abbildungs- oder Projektionsoptik 107 angeordnet ist, umzulenken. Die Projektionsoptik 107 ist eingerichtet vor einem Fahrzeug ein Lichtbild auszubilden.

In einem zweiten angesteuerten Zustand des steuerbaren Reflektors 190 kann Licht in eine dritte Ausbreitungsrichtung 130, in der eine optische Absorbereinrichtung 105 gelegen ist, reflektiert werden.

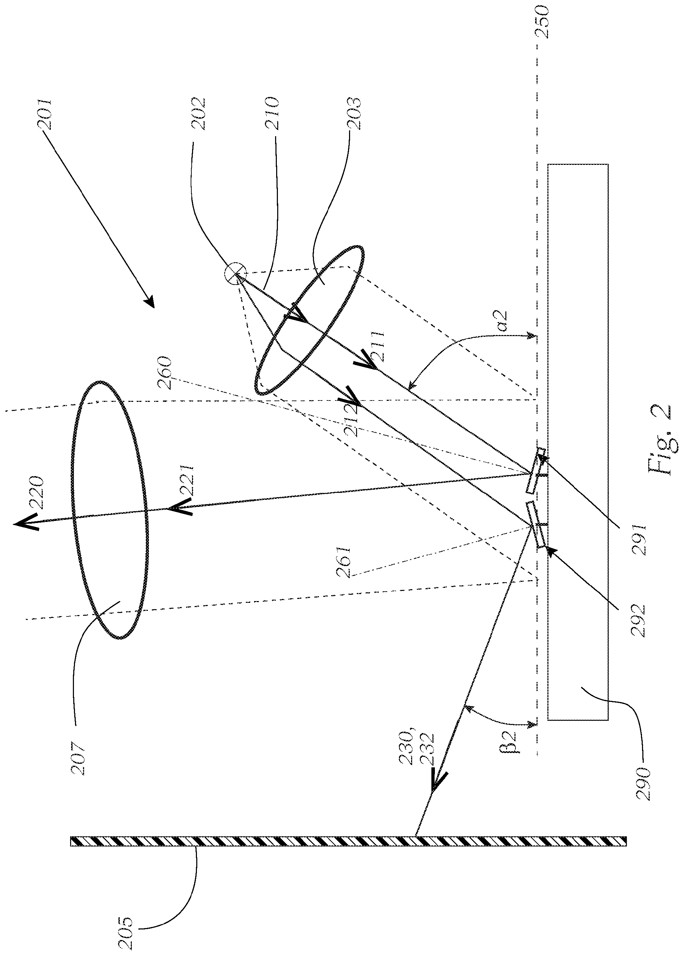

In **Fig. 2** ist eine schematische Darstellung des Funktionsprinzips einer Anordnung eines Fahrzeugscheinwerfers 201 nach dem Stand der Technik in einer ersten Konfiguration gezeigt, die im Wesentlichen der Anordnung nach Fig. 1 entspricht und in einer detaillierten Seitenansicht dargestellt ist.

Eine Lichtquelleneinheit 202 ist eingerichtet Licht zu emittieren, wobei ein erheblicher Anteil des von der Lichtquelleneinheit 201 emittierten Licht als Lichtstrahl in eine erste Ausbreitungsrichtung 210 gelenkt wird, in der ein steuerbarer Reflektor 290 angeordnet ist. Zwischen der Lichtquelleneinheit 202 und dem steuerbaren Reflektor 290 ist eine Primäroptik 203 in Form eines Linsensystems angeordnet, die geeignet ist das Licht in der Ebene 250 des steuerbaren Reflektors zu fokussieren, einfachheitshalber sind in den Figuren weitgehend parallele Lichtstrahlen dargestellt, abzustrahlen und folglich den steuerbaren Reflektor 290 gleichmäßig zu beleuchten, und im Brennpunkt der Primäroptik 203 die lichtemittierende Fläche der Lichtquelleneinheit 202 gelegen ist. Beispielsweise können als Lichtquelle der Lichtquelleneinheit 202 Halbleiterlichtquellen in Form von LEDs verwendet werden. Es kann beispielsweise der geometrische Mittelpunkt der lichtemittierenden Fläche der LED im Brennpunkt der Primäroptik 203 angeordnet werden. Häufig wird die Primäroptik 203 bereits in ein LED-Bauteil integriert und das LED-Bauteil kann den steuerbaren Reflektor 290 weitgehend gleichmäßig beleuchten. Das Linsensystem kann aus Sammel- und/ oder Zerstreuungslinsen bestehen.

Das emittierte Licht ist durch zwei erste Lichtstrahlen 211, 212, die Strahlteile des in die erste Ausbreitungsrichtung 210 gerichteten Lichts bilden, dargestellt. Die zwei ersten Lichtstrahlen 211, 212 liegen parallel zueinander. Die erste Ausbreitungsrichtung 210 verläuft ausgehend von der Lichtquelleneinheit 202 durch die Primäroptik 203 zum steuerbaren Reflektor, bei dem beispielhaft zwei mit umfasste steuerbare Einzelspiegel 291, 292 dargestellt sind.

Der steuerbare Reflektor 290 reflektiert zumindest teilweise das Licht in eine zweite Ausbreitungsrichtung 220, in der eine Abbildungs- oder Projektionsoptik 207 angeordnet ist. Die Projektionsoptik 207 ist eingerichtet vor dem Fahrzeug ein Lichtbild auszubilden.

Der steuerbare Reflektor 290 umfasst eine Anordnung mit einer Vielzahl von steuerbaren Einzelspiegeln 291, 292, deren reflektierende Oberflächen in einer nicht verkippten Grundstellung gemeinsam plan eine erste Ebene 250 bilden und beispielsweise als rechteckförmige Matrix von Einzelspiegeln 291, 292 angeordnet sind.

Das von der Lichtquelleneinheit 202 emittierte Licht fällt in der ersten Ausbreitungsrichtung 210 in einem ersten Winkel a2 auf den steuerbaren Reflektor 290 beziehungsweise dessen Einzelspiegel 291, 292 und wird von diesem an der Oberflächennormale 260 der Spiegeloberfläche der Einzelspiegel 291 in einem ersten angesteuerten Zustand in Richtung der zweiten Ausbreitungsrichtung 220 reflektiert. In einem zweiten angesteuerten Zustand des steuerbaren Reflektors 292 wird das Licht an der Oberflächennormale 261 der Spiegeloberfläche der Einzelspiegel 292 unter einem zweiten Winkel β2 in eine dritte Ausbreitungsrichtung 230, in der eine optische Absorbereinrichtung 205 gelegen ist, reflektiert.

Demzufolge entspricht der Winkel α2 einem Winkel des eingestrahlten Lichtstrahls bezüglich des steuerbaren Reflektors 290 beziehungsweise der Ebene 250. Der Winkel β2 entspricht einem Winkel des reflektierten Lichtstrahls des steuerbaren Reflektors 290 in einem ausblendenden Zustand des steuerbaren Reflektors 290 beziehungsweise des Einzelspiegels 292 bezüglich der Ebene 250.

Es wird unter einer nicht verkippten Grundstellung eines Einzelspiegels jener stabile Zustand verstanden, in dem der Einzelspiegel keine Auslenkung bezüglich seiner Drehachse erfährt und somit eine Neutralstellung einnimmt. Folglich bilden in diesem Zustand die Spiegelflächen aller Einzelspiegel gemeinsam die Ebene 250. Für gewöhnlich ist dieser Zustand nur in einer Konfiguration eines DMD-Chips erzielbar, wenn keine Ansteuerung erfolgt beziehungsweise keine Betriebs- oder Steuerspannung am DMD-Chip oder an der Einzelspiegeln anliegt.

Zusätzlich weist jeder Einzelspiegel zwei weitere stabile Zustände auf, die den Endlagen der Verschwenkung der Einzelspiegel entsprechen, und beispielsweise auf einen Winkel von +12° und -12°, ausgehend vom nicht verkippten Zustand, verschwenkbar sind. Es ist dabei klar, dass die Endlagen nicht die maximal mögliche Verschwenkung der Einzelspiegel sein müssen, sondern jene Stellungen der Einzelspiegel sind, in denen jeweils ein stabiler Zustand des Spiegel in einer verschwenkten Position erreicht werden kann. Folglich dienen die zwei stabilen Zustände primär dazu, die Reflexionsrichtung eines einfallenden Lichtstrahls zwischen zwei definierten Richtungen umzuschalten und in diesen zwei Richtungen vorzugsweise entweder eine Abstrahlung oder eine Absorption des Lichts zu erreichen. Die beschriebene Verkippung ist sowohl mit einem DMD als auch mit einem AMD realisierbar.

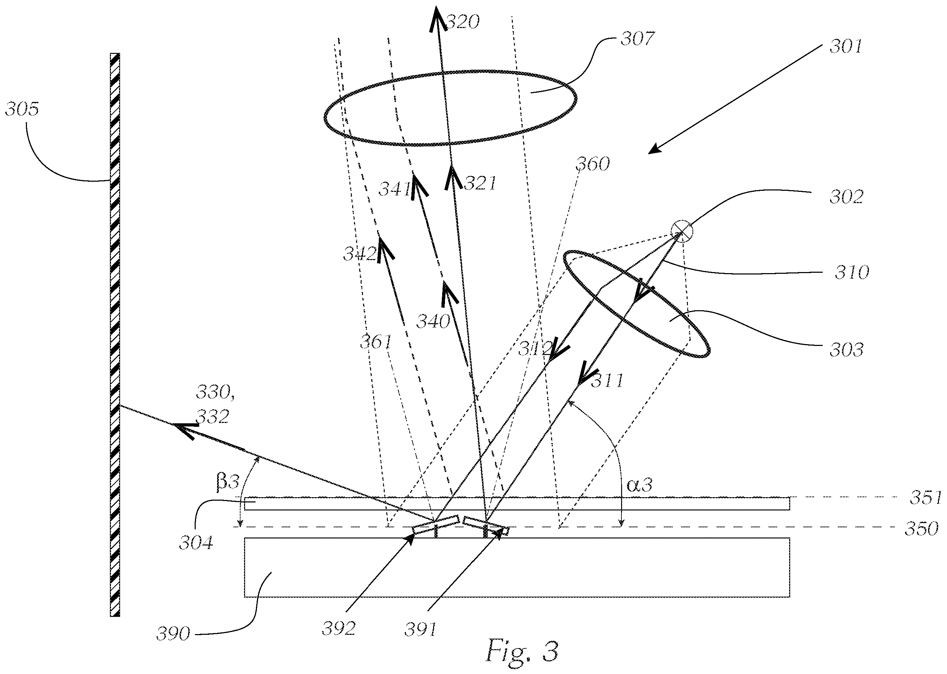

**Fig. 3** zeigt eine schematische Darstellung des Funktionsprinzips einer Anordnung eines Fahrzeugscheinwerfers 301 nach dem Stand der Technik in einer zweiten Konfiguration, die einer Weiterentwicklung der Anordnung nach Fig. 1 oder Fig. 2 entspricht und einen steuerbaren Reflektor 390 mit einer optisch transparenten Abdeckung 304 in einer ersten Winkelstellung umfasst, in der der steuerbare Reflektor 390 und eine optisch transparente Abdeckung 304 parallel zueinander ausgerichtet sind.

Die optisch transparente Abdeckung 304 kann an ihrer Oberfläche einfallendes Licht trotzdem reflektieren, auch wenn die Oberfläche beispielsweise mit einer Antireflexbeschichtung versehen ist. Eine Antireflexbeschichtung reduziert nur das Ausmaß an unerwünschten Reflexionen, jedoch verbleiben restliche Reflexionen, die das Lichtbild eines Fahrzeugscheinwerfers stören können, weil sie den Kontrast reduzieren. Die optisch transparente Abdeckung 304 kann aus einem optisch transparenten Glas oder einem Kunststoff wie Acryl oder Polycarbonat sein, wobei eine hohe Lichtdurchlässigkeit des verwendeten Materials wichtig ist.

Die optisch transparente Abdeckung 304 ist in einer zweiten Ebene 351, parallel zur ersten Ebene 350, zwischen einer Lichtquelleneinheit 302 und dem steuerbaren Reflektor 390 derart angeordnet, dass Licht in einer ersten Ausbreitungsrichtung 310 und in einer zweiten Ausbreitungsrichtung 320 die optisch transparente Abdeckung 304 durchdringen kann.

Außerdem kann Licht entlang einer dritten Ausbreitungsrichtung 330 die optisch transparente Abdeckung 304 durchdringen, wenn Licht in Richtung einer optischen Absorbereinrichtung 305 geleitet wird.

Das von einer Lichtquelleneinheit 302 emittierte Licht kann in der ersten Ausbreitungsrichtung 310 unter dem ersten Winkel a3 auf die optisch transparente Abdeckung 304 fallen, wird vom deren Oberfläche teilweise und parallel zur zweiten Ausbreitungsrichtung 320 in eine vierte Ausbreitungsrichtung 340 reflektiert.

Für die übrigen Elemente und Darstellungen des gezeigten Fahrzeugscheinwerfers 301 gelten analog die Ausführungen der vorhergehenden Figuren.

Die vierte Ausbreitungsrichtung 340 kann im Strahlengang der Abbildungs- oder Projektionsoptik 307 gelegen sein und zu unerwünschtem Streulicht führen, das ebenso wie die durch die Anordnung erzeugte Lichtverteilung in eine Richtung vor dem Fahrzeug projiziert wird und vor dem Fahrzeug ein Lichtbild ausbilden kann. Das unerwünschte Streulicht beziehungsweise dessen Lichtbild reduziert häufig den Kontrast des Lichtbildes, das in der zweiten Ausbreitungsrichtung 320 projiziert wird, was die Lichtfunktion des Fahrzeugs unerwünscht beeinträchtigt.

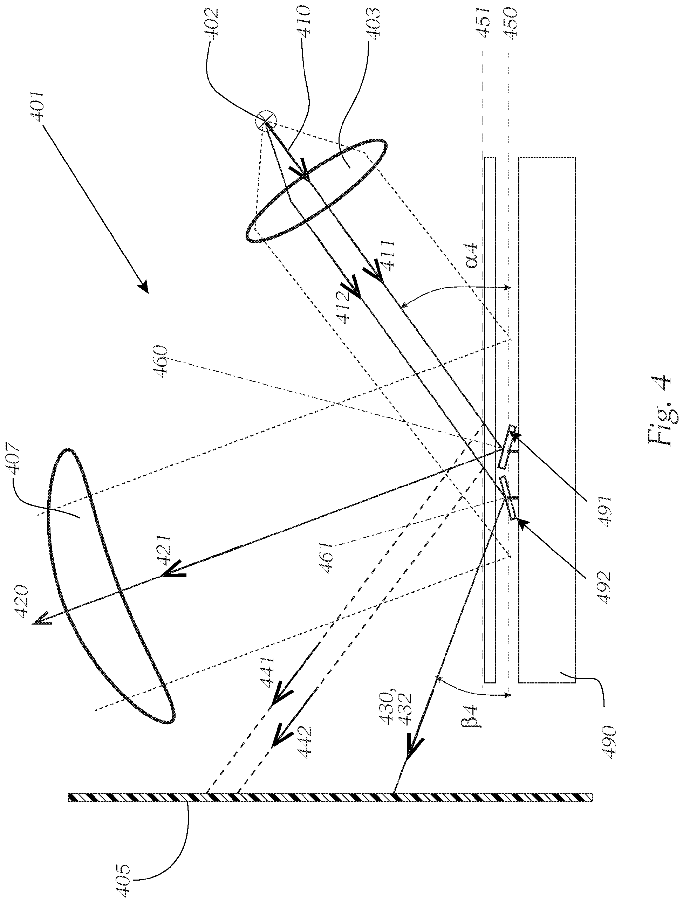

**Fig. 4** zeigt eine schematische Darstellung des Funktionsprinzips einer Anordnung eines Fahrzeugscheinwerfers 401 nach dem Stand der Technik in einer dritten Konfiguration, die eine alternative Variante der Anordnung nach Fig. 1, Fig. 2 oder Fig. 3 darstellt und einen steuerbaren Reflektor 490 mit einer optisch transparenten Abdeckung 404 in der ersten Winkelstellung umfasst, in der der steuerbare Reflektor 490 und die optisch transparente Abdeckung 404 parallel zueinander ausgerichtet sind.

Der steuerbare Reflektor 490 umfasst eine Anordnung einer Vielzahl von steuerbaren Einzelspiegeln 491, deren reflektierende Oberflächen in einem nicht verkippten Zustand plan in einer ersten Ebene 450 und als rechteckförmige Matrix von Einzelspiegeln 491 angeordnet sind.

Die optisch transparente Abdeckung 404 ist in einer zweiten Ebene 451 zwischen Lichtquelleneinheit 402 und dem steuerbaren Reflektor 490 derart angeordnet, dass Licht in einer ersten Ausbreitungsrichtung 410 und in einer zweiten Ausbreitungsrichtung 420 die optisch transparente Abdeckung 404 durchdringen kann.

Für die übrigen Elemente und Darstellungen des gezeigten Fahrzeugscheinwerfers 401 gelten analog die Ausführungen der vorhergehenden Figuren.

Die erste Winkelstellung der optisch transparenten Abdeckung 404 ist derart definiert, dass die erste Ebene 450 parallel zur zweiten Ebene 451 angeordnet ist.

Die dritte Konfiguration ist bezüglich ihres Einfallswinkels dadurch charakterisiert, dass ein erster Winkel α4 in Bezug auf die erste Ebene 450 geringer ist, als der entsprechende erste Winkel α3 auf die erste Ebene 350 der Anordnung nach Fig. 3. Durch diese Wahl des ersten Winkels α4 kann erreicht werden, dass kein oder zumindest deutlich weniger Licht in die vierte Ausbreitungsrichtung 440 in der optischen Bereich des Projektionsoptik 407 gelangt und kein störendes Streulicht erzeugt wird, dass im Lichtbild vor dem Fahrzeug unerwünscht wäre.

Diese dritte Konfiguration weist allerdings den Nachteil auf, dass die Effizienz der gesamten Anordnung ungünstig beeinträchtigt wird, da weniger Licht von der Lichtquelle empfangen werden kann. Zusätzlich ist der steuerbaren Reflektor 490, häufig ein DLP^{®}-Chip, im maximal zulässigen Einfallswinkel eingeschränkt, sodass die Nutzung eines streifenden Lichteinfalles, das heißt wenn ein Lichtstrahl nur teilweise in die gewünschte Projektionsrichtung gestrahlt wird, nicht zielführend ist.

In **Fig. 5** ist ein nicht erfindungsgemäßer Fahrzeugscheinwerfer 501 schematisch mit wichtigen Komponenten gezeigt, der eine Lichtquelleneinheit 502, eine Primäroptik 503, einen steuerbaren Reflektor 590, eine optisch transparente Abdeckung 504, eine optische Absorbereinrichtung 505, ein optisches Abschattungselement 506 und eine Projektionsoptik 507 umfasst.

Die Lichtquelleneinheit 502 ist eingerichtet Licht zu emittieren und in eine erste Ausbreitungsrichtung 510 zu leuchten, in dessen Strahlengang der steuerbare Reflektor 590 angeordnet ist. Der steuerbare Reflektor 590 reflektiert zumindest teilweise das Licht in eine zweite Ausbreitungsrichtung 520, in dessen Strahlengang die Projektionsoptik 507 angeordnet ist und in eine Richtung vor dem Fahrzeug orientiert ist, um vor dem Fahrzeug ein Lichtbild auszubilden.

Der steuerbare Reflektor 590 umfasst eine Anordnung mit einer Vielzahl von steuerbaren Einzelspiegeln 591, 592, deren reflektierende Oberflächen in einer nicht verkippten Grundstellung gemeinsam plan eine erste Ebene 550 bilden und beispielsweise als rechteckförmige Matrix von Einzelspiegeln 591, 592 angeordnet sind Das von der Lichtquelleneinheit 502 emittierte Licht fällt in der ersten Ausbreitungsrichtung 510 unter einem ersten Winkel α5 auf den steuerbaren Reflektor 590 und wird von diesem in einem ersten angesteuerten Zustand in Richtung der zweiten Ausbreitungsrichtung 520 reflektiert. In einem zweiten angesteuerten Zustand des steuerbaren Reflektors 590 wird das Licht unter einem zweiten Winkel β5 in Richtung der optischen Absorbereinrichtung 505 reflektiert.

Die optisch transparente Abdeckung 504 ist in einer zweiten Ebene 551 zwischen Lichtquelleneinheit 502 und dem steuerbaren Reflektor 590 derart angeordnet, dass Licht in der ersten Ausbreitungsrichtung 510 und in der zweiten Ausbreitungsrichtung 520 die optisch transparente Abdeckung 504 durchdringen kann.

Das von der Lichtquelleneinheit 502 emittierte Licht fällt in der ersten Ausbreitungsrichtung 510 unter dem ersten Winkel α5 auf die optisch transparente Abdeckung 504, wird von diesem teilweise und parallel zur zweiten Ausbreitungsrichtung 520 in eine vierte Ausbreitungsrichtung 540 reflektiert und wird in der vierten Ausbreitungsrichtung 540 von dem optischen Abschattungselement 506 blockiert.

Das optische Abschattungselement 506 überlappt mit dem Projektionsbereich der Projektionsoptik 507 insofern, als die zweite Ausbreitungsrichtung 520 und die vierte Ausbreitungsrichtung 540 jeweils einen gemeinsamen Bereich der Lichtausbreitung in Bezug auf ihre Ausbreitungsrichtungen aufweisen.

In diesem Ausführungsbeispiel der Erfindung umfasst die Lichtquelleneinheit 502 zumindest eine Halbleiter-Lichtquelle, vorzugsweise eine Power-LED, eine Hochstrom-LED oder eine Laserdiode. Ferner kann die Lichtquelleneinheit 502 und die Primäroptik 503 vorzugsweise in Form einer optischen Linse in einem gemeinsamen Bauteil ausgeführt sein. Die Primäroptik 503 bündelt das emittierte Licht und lenkt das gebündelte Licht auf den steuerbaren Reflektor 590. Hierbei kann eine Strahlformung derart eingerichtet sein, dass möglichst viel Licht auf die zu beleuchtende, rechteckige Fläche des steuerbaren Reflektors 590 fällt und nicht ungenützt in Form von Wärme wieder abgeführt werden muss. Die gezeigte Ausführungsform der Lichtquelleneinheit 502 zeigt einen beispielhaften Aufbau. Es sind jedoch viele andere Varianten für eine Lichtquelleneinheit denkbar, die dem Fachmann geläufig sind.

Das Abschattungselement 506 ist in diesem Beispiel eine Blende, was eine besonders einfache und günstige Bauform erlaubt. Es muss jedoch bei der Konzeption des Fahrzeugscheinwerfers berücksichtigt werden, dass die Blende, die gegebenenfalls reflektierende Eigenschaften aufweisen kann, nicht zu unerwünschten Beeinträchtigungen im Lichtbild des Fahrzeugscheinwerfers führt. Günstig ist es, wenn das Abschattungselement 506 in Form einer reflektierenden Blende Licht zur optischen Absorbereinrichtung 505 reflektiert. Die optische Absorbereinrichtung 505 kann in diesem Fall die Konversion von Licht in Wärme übernehmen und kann die Wärme geeignet abführen.

Alternativ kann das Abschattungselement 506 ein optischer Absorber sein. Dies ist insofern günstig, als das abgeschattete Licht direkt am Abschattungselement 506 in Wärme konvertiert werden kann, und daher wird die optische Absorbereinrichtung 505 des Fahrzeugscheinwerfers nicht zusätzlich erwärmt. Dadurch kann erreicht werden, dass die optische Absorbereinrichtung 505 kleiner und kostengünstiger dimensioniert und folglich insgesamt eine kleinere Baugröße des Scheinwerfers erzielt wird.

In diesem Ausführungsbeispiel ist das Abschattungselement als Blende 506 ausgeführt und zumindest teilweise im Strahlengang der zweiten Ausbreitungsrichtung 520 und vor der Projektionsoptik 507 angeordnet, um unerwünschtes Licht in der vierten Ausbreitungsrichtung 540 zu reduzieren, sowie eine kleine Bauform des Fahrzeugscheinwerfers 501 zu erreichen und eine geringe Präzision an die Abmessungen und die Position des Abschattungselements 506 zu erfordern. Die Blende 506 kann als Teil der Projektionsoptik 507 ausgeführt sein, sodass Positionierungsfehler minimiert werden.

Die Breite des Überlappungsbereichs der Projektionen in den Ausbreitungsrichtungen 520 und 540 definiert eine Kenngröße 570. Diese Kenngröße 570 gibt an, um wieviel die erste Ausbreitungsrichtung 520 in ihrem Strahlengang durch das Abschattungselement 506 abgedeckt beziehungsweise reduziert ist. Diese Reduktion schränkt die Freiheitsgrade in der Konzeption eines Fahrzeugscheinwerfers ein und kann größere einzelne Komponenten oder insgesamt eine größere Bauform erfordern, was unerwünscht ist.

Alternativ kann das Abschattungselement 506 in der vierten Ausbreitungsrichtung 540 zumindest teilweise im Strahlengang der zweiten Ausbreitungsrichtung 520 und nach der Projektionsoptik 507 angeordnet sein, wodurch die Abschattungen und die damit einhergehenden optischen Reflexionen oder thermischen Emissionen geometrisch weit entfernt von der optischen Absorbereinrichtung auftreten, was günstig für die Verteilung der thermischen Verluste innerhalb des Fahrzeugscheinwerfers sein kann. Diese Ausführungsform ist in Fig. 6 dargestellt.

In der Ausführungsform der Erfindung nach Fig. 5 ist die zweite Ebene 551 parallel zur ersten Ebene 550 gelegen.

**Fig. 6** zeigt eine schematische Darstellung des Funktionsprinzips einer Anordnung eines erfindungsgemäßen Fahrzeugscheinwerfers 601 in einer fünften Konfiguration, die eine Weiterentwicklung der Anordnung nach Fig. 5 ist, wobei ein Abschattungselement beziehungsweise eine Blende 606 in der vierten Ausbreitungsrichtung 640 nach einer Projektionslinse 607 angeordnet ist.

Für die übrigen Elemente und Darstellungen des gezeigten Fahrzeugscheinwerfers 601 gelten analog die Ausführungen der vorhergehenden Figuren, insbesondere die Ausführung des Abschattungselements 606.

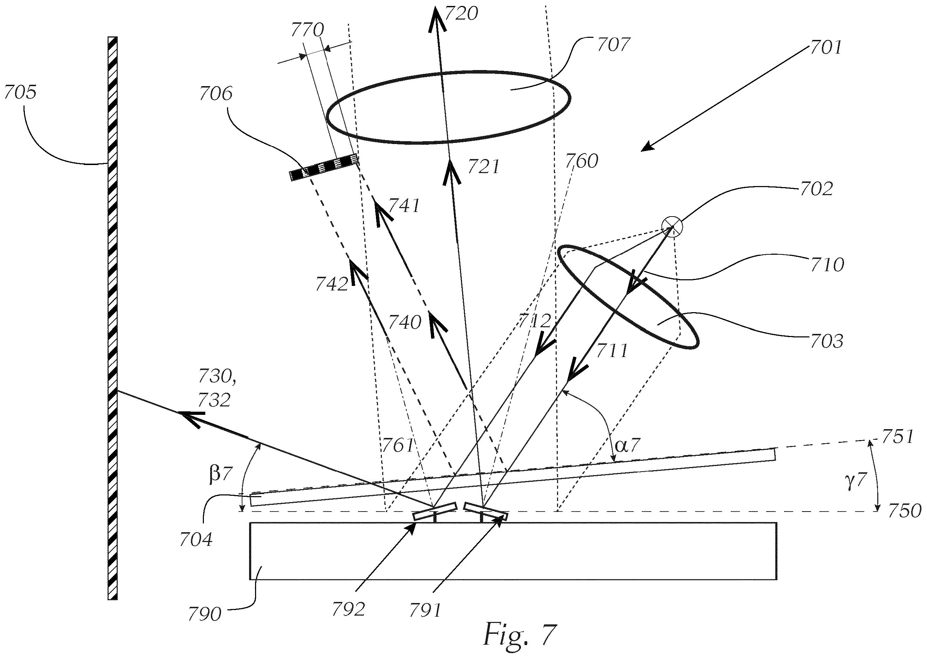

**Fig. 7** zeigt eine schematische Darstellung des Funktionsprinzips einer Anordnung eines nicht erfindungsgemäßen Fahrzeugscheinwerfers 701 in einer vierten Konfiguration, die einen steuerbaren Reflektor 790 mit einer optisch transparenten Abdeckung 704 in einer zweiten Winkelstellung umfasst, in der der steuerbare Reflektor 790 und die optisch transparente Abdeckung 704 einen dritten Winkel γ7 einschließen, der größer als 0° ist.

Der steuerbare Reflektor 790 umfasst eine Anordnung einer Vielzahl von steuerbaren Einzelspiegeln 791, 792, deren reflektierende Oberflächen in einer nicht verkippten Grundstellung gemeinsam plan eine erste Ebene 750 bilden und beispielsweise als rechteckförmige Matrix von Einzelspiegeln 791, 792 angeordnet sind Die optisch transparente Abdeckung 704 ist in einer zweiten Ebene 751 zwischen Lichtquelleneinheit 702 und dem steuerbaren Reflektor 790 derart angeordnet, dass Licht in der ersten Ausbreitungsrichtung 710 und in der zweiten Ausbreitungsrichtung 720 die optisch transparente Abdeckung 704 durchdringen kann.

Für die übrigen Elemente und Darstellungen des gezeigten Fahrzeugscheinwerfers 701 gelten analog die Ausführungen der vorhergehenden Figuren.

Die zweite Winkelstellung der optisch transparenten Abdeckung 704 ist derart definiert, dass die zweite Ebene 751 in einem dritten Winkel γ7 zur ersten Ebene 750 gelegen ist.

Durch diese Maßnahme kann erreicht werden, dass deutlich weniger Licht aus der vierten Ausbreitungsrichtung 740 in den optischen Bereich der Projektionsoptik 707 gelangt und störendes Streulicht erzeugt, dass im Lichtbild vor dem Fahrzeug unerwünscht wäre.

Die Breite des Überlappungsbereichs der Projektionen in den Ausbreitungsrichtung 720 und 740 definiert die Kenngröße 770. Im Vergleich ist die Kenngröße 770 kleiner als die Kenngröße 570 nach Fig. 5, wodurch eine Effizienzsteigerung der Projektionsoptik und insbesondere eine Verbesserung des Lichtbilds erreicht werden kann, indem der dritte Winkel γ7 dafür sorgt, dass die Reflexionen zumindest nur teilweise in die zweite Ausbreitungsrichtung 720 gelenkt werden und folglich nur ein geringerer Anteil durch ein optisches Abschattungselement 706 im Lichtbild unterdrückt werden muss.

Es ist klar, dass bei einer mehrteilig ausgeführten Projektionsoptik ein Abschattungselement auch zwischen den einzelnen Elementen der mehrteiligen Projektionsoptik gelegen sein kann. In diesem Fall ist es eine Frage der Definition, welches Elemente der mehrteiligen Projektionsoptik die wesentlichste Funktion einer Projektionsoptik bildet und folglich als "Hauptprojektionsoptik" agiert. Folglich kann ein Abschattungselement vor oder nach der Hauptprojektionsoptik angeordnet sein, analog zu den Anordnungen nach Fig. 5, Fig. 6 beziehungsweise Fig. 7.

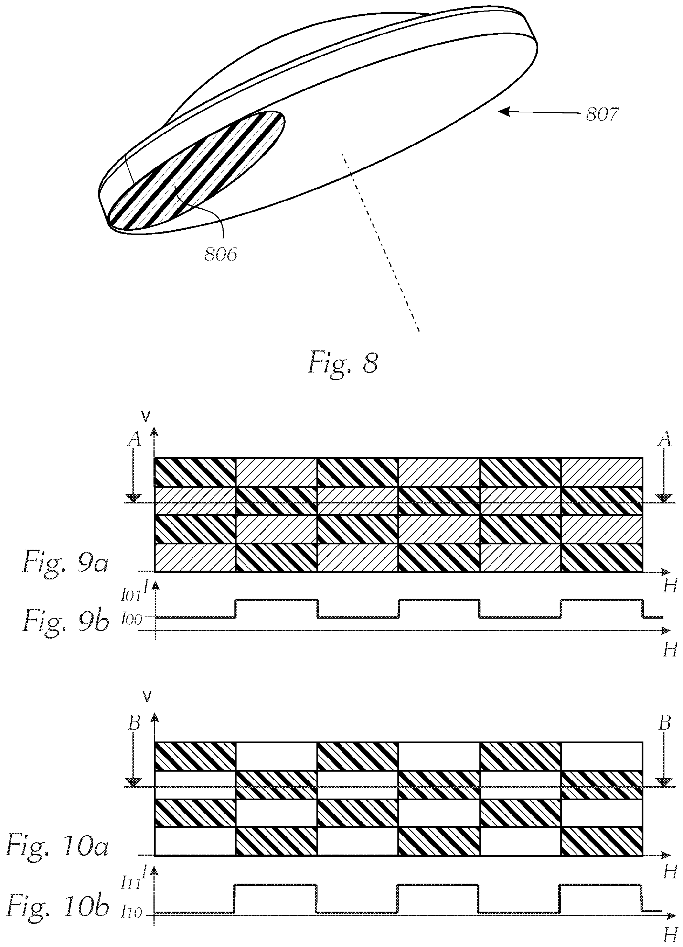

**Fig. 8** zeigt eine 2. nicht erfindungsgemäße Ausführungsform einer Projektionslinse 807 und einem Abschattungselement beziehungsweise eine Blende 806, wobei die Blende 806 auf der Projektionslinse 807 aufgebracht ist. Durch diese Ausführungsform kann erreicht werden, dass diese beiden Komponenten eines Fahrzeugscheinwerfers derart gefertigt werden, dass sie optisch und mechanisch aufeinander abgestimmt sind und nur eine gemeinsame Halterung benötigt wird, was Kostenvorteile bietet. Je nach Orientierung der Projektionslinse 807 kann eine Anordnung analog zur Fig. 5, Fig. 6 oder Fig. 7 geschaffen werden.

**Fig. 9a** zeigt eine Lichtverteilung eines Fahrzeugscheinwerfers in DLP^{®}-Technologie nach dem Stand der Technik, wobei die Lichtverteilung durch ein schachbrettartiges Testmuster, das über eine horizontale Achse H und eine vertikale Achse V dargestellt ist, definiert ist und die unterschiedlich schraffierten Flächen verschiedene Bereiche mit jeweils gleicher Lichtintensität zeigen.

In **Fig. 9b** ist die Intensitätsverteilung nach der Fig. 9a in der Schnittebene A-A gezeigt, in der erkennbar ist, dass im dargestellten Fall mit einem schachbrettartigen Testmuster die Intensitäten zwischen einem Minimalwert I00 und einem Maximalwert I01 schwanken. Aus dem Verhältnis dieser beiden Extremwerte I01 zu I00 lässt sich ein Kontrastwert bestimmen.

**Fig. 10a** zeigt eine Lichtverteilung eines erfindungsgemäßen Fahrzeugscheinwerfers in einer Darstellung analog zur Fig. 9a.

In **Fig. 10b** ist eine Intensitätsverteilung nach der Fig. 10a in der Schnittebene B-B gezeigt, in der erkennbar ist, dass im dargestellten Fall mit einem schachbrettartigen Testmuster die Intensitäten zwischen einem Minimalwert I10 und einem Maximalwert I11 schwanken, wobei der Minimalwert I10 deutlich geringer ist als der Minimalwert I00 nach Fig. 9b, beziehungsweise nahezu Null ist und folglich der erfindungsgemäße Fahrzeugscheinwerfer einen deutlich besseren Kontrastwert im Lichtbild schafft.

### Bezugszeichenliste:

- 100: Elektronikgehäuse
- 101, 201, 301, 401, 501, 601, 701: Fahrzeugscheinwerfer
- 102, 202, 302, 402, 502, 602, 702: Lichtquelleneinheit
- 103, 203, 303, 403, 503, 603, 703: Primäroptik
- 190, 290, 390, 490, 590, 690, 790: steuerbarer Reflektor
- 191, 291, 391, 491, 591, 691, 791, 192, 292, 392, 492, 592, 692, 792: steuerbare Einzelspiegel
- 104, 304, 404, 504, 604, 704: optisch transparente Abdeckung
- 105, 205, 305, 405, 505, 605, 705: optischer Absorbereinrichtung
- 506, 606, 706, 806: optisches Abschattungselement
- 107, 107a, 207, 307, 407, 507, 607, 707, 807: Projektionsoptik
- 210, 310, 410, 510, 610, 710: erste Ausbreitungsrichtung
- 211, 311, 411, 511, 611, 711, 212, 312, 412, 512, 612, 712: erste Lichtstrahlen
- 120, 220, 320, 420, 520, 620, 720: zweite Ausbreitungsrichtung
- 221, 321, 421, 521, 621, 721: zweite Lichtstrahlen
- 130, 230, 330, 430, 530, 630, 730: dritte Ausbreitungsrichtung
- 232, 332, 432, 532, 632, 732: dritte Lichtstrahlen
- 440, 540, 640, 740: vierte Ausbreitungsrichtung
- 441, 541, 641, 741, 342,442, 542, 642, 742: vierte Lichtstrahlen
- 250, 350, 450, 550, 650, 750: erste Ebene
- 351,451, 551, 651, 751: zweite Ebene
- 260, 360, 460, 560, 660, 760, 261, 361, 461, 561, 661, 761: Oberflächennormale
- 570, 770: Kenngröße für Überlappung
- α2, α3, α4 α5, α6, α7: erster Winkel
- β2, β3, β4, β5, β6, β7: zweiter Winkel
- γ7: dritter Winkel
- H: horizontale Achse
- V: vertikale Achse
- I00, I01, I10, I11: Lichtintensität bzw. Beleuchtungsstärke

## Patentansprüche

1. Fahrzeugscheinwerfer (501, 601, 701), umfassend zumindest eine Lichtquelleneinheit (502, 602, 702), zumindest einen steuerbaren Reflektor (590, 690, 790), zumindest eine optisch transparente Abdeckung (504, 604, 704), zumindest eine optische Absorbereinrichtung (505, 605, 705), zumindest ein optisches Abschattungselement (506, 606, 706) und zumindest eine Projektionsoptik (507, 607, 707, 807),
wobei die Lichtquelleneinheit (502, 602, 702) eingerichtet ist, Licht zu emittieren und in eine erste Ausbreitungsrichtung (510, 610, 710) zu leuchten, in deren Strahlengang der steuerbare Reflektor (590, 690, 790) angeordnet ist, und der steuerbare Reflektor (590, 690, 790) das Licht in eine zweite Ausbreitungsrichtung (520, 620, 720), in deren Strahlengang die Projektionsoptik (507, 607, 707, 807) angeordnet ist und in eine Richtung vor dem Fahrzeug orientiert ist, zumindest teilweise reflektiert, um vor dem Fahrzeug ein Lichtbild auszubilden,
wobei der steuerbare Reflektor (590, 690, 790) eine Anordnung einer Vielzahl von steuerbaren Einzelspiegeln (591, 691, 791, 592, 692, 792), deren reflektierende Oberflächen in einem nicht verkippten Zustand plan in einer ersten Ebene (550, 650, 750) und beispielsweise als rechteckförmige Matrix von Einzelspiegeln (191, 291) angeordnet sind, umfasst,
wobei das von der Lichtquelleneinheit (502, 602, 702) emittierte Licht in der ersten Ausbreitungsrichtung (510, 610, 710) auf den steuerbaren Reflektor (590, 690, 790) fällt und von diesem einem ersten angesteuerten Zustand in Richtung der zweiten Ausbreitungsrichtung (520, 620, 720) reflektiert wird und/ oder in einem zweiten angesteuerten Zustand des steuerbaren Reflektors (590, 690, 790) in eine dritte Ausbreitungsrichtung (532, 632, 732) reflektiert wird, und
die optisch transparente Abdeckung (504, 604, 704) in einer zweiten Ebene (551, 651, 751) zwischen der Lichtquelleneinheit (502, 602, 702) und dem steuerbaren Reflektor (590, 690, 790) derart angeordnet ist, dass Licht in der ersten Ausbreitungsrichtung (510, 610, 710) und in der zweiten Ausbreitungsrichtung (520, 620, 720) die optisch transparente Abdeckung (504, 604, 704) durchdringt,
**dadurch gekennzeichnet, dass**
das von der Lichtquelleneinheit (502, 602, 702) emittierte Licht in der ersten Ausbreitungsrichtung (510, 610, 710) auf die optisch transparente Abdeckung (504, 604, 704) fällt und von diesem teilweise in eine vierte Ausbreitungsrichtung (540, 640, 740) reflektiert und in der vierten Ausbreitungsrichtung (540, 640, 740) von dem optischen Abschattungselement (506, 606, 706) blockiert wird, wobei das Abschattungselement (506, 606, 706) zumindest teilweise im Strahlengang der zweiten Ausbreitungsrichtung (520, 620, 720) und nach der Projektionsoptik (507, 607, 707, 807) angeordnet ist.

2. Fahrzeugscheinwerfer (101) nach Anspruch 1, **dadurch gekennzeichnet, dass** in der dritten Ausbreitungsrichtung (532, 632, 732) die optische Absorbereinrichtung (505, 605, 705) gelegen ist.

3. Fahrzeugscheinwerfer (101) nach Anspruch 1 oder 2, **dadurch gekennzeichnet, dass** die zweite Ebene (551, 651, 751) parallel zur ersten Ebene (550, 650, 750) liegt.

4. Fahrzeugscheinwerfer (201) nach Anspruch 1 oder 2, **dadurch gekennzeichnet, dass** die zweite Ebene (551, 651, 751) in einem dritten Winkel (γ7) zur ersten Ebene (550, 650, 750) liegt, wobei der dritten Winkel (γ7) größer als 0° und kleiner als 15°, bevorzugt größer als 0° und kleiner als 5° ist.

5. Fahrzeugscheinwerfer (501, 601, 701) nach einem der Ansprüche 1 bis 4, **dadurch gekennzeichnet, dass** das Abschattungselement (506, 606, 706) zumindest teilweise im Strahlengang der zweiten Ausbreitungsrichtung (520, 620, 720) und vor der Projektionsoptik (507, 607, 707, 807) angeordnet ist.

6. Fahrzeugscheinwerfer (501, 601, 701) nach einem der Ansprüche 1 bis 5, **dadurch gekennzeichnet, dass** das Abschattungselement (506, 606, 706) eine Blende ist, welche als Gesichtsfeldblende ausgebildet ist.

7. Fahrzeugscheinwerfer (501, 601, 701) nach einem der Ansprüche 1 bis 5, **dadurch gekennzeichnet, dass** das Abschattungselement (506, 606, 706) ein optischer Absorber ist.

8. Fahrzeugscheinwerfer (501, 601, 701) nach einem der Ansprüche 1 bis 7, **dadurch gekennzeichnet, dass** das Abschattungselement (506, 606, 706) und die optische Absorbereinrichtung (505, 605, 705) als ein gemeinsames Bauteil ausgeführt sind.

9. Fahrzeugscheinwerfer (501, 601, 701) nach einem der Ansprüche 1 bis 8, **dadurch gekennzeichnet, dass** das von der Lichtquelleneinheit (502, 602, 702) emittierte Licht in der ersten Ausbreitungsrichtung (510, 610, 710) unter einem ersten Winkel (α5, α6, α7) auf die optisch transparente Abdeckung (504, 604, 704) fällt, wobei der erste Winkel (α5, α6, α7) in einem Bereich zwischen 50° und 65° liegt, bevorzugt zwischen 55° und 60°.

10. Fahrzeugscheinwerfer (501, 601, 701) nach einem der Ansprüche 1 bis 9, **dadurch gekennzeichnet, dass** die Lichtquelleneinheit (502, 602, 702) zumindest eine Halbleiter-Lichtquelle, vorzugsweise eine Power-LED, eine Hochstrom-LED oder eine Laserdiode, und vorzugsweise eine Primäroptik (103, 203) in Form einer optischen Linse umfasst.

## Claims

1. Vehicle headlamp (501, 601, 701), comprising at least one light source unit (502, 602, 702), at least one controllable reflector (590, 690, 790), at least one optically transparent cover (504, 604, 704), at least one optical absorber device (505, 605, 705), at least one optical shading element (506, 606, 706) and at least one projection optic (507, 607, 707, 807),
wherein the light source unit (502, 602, 702) is arranged to emit light and to shine in a first propagation direction (510, 610, 710), in the beam path of which the controllable reflector (590, 690, 790) is arranged, and the controllable reflector (590, 690, 790) at least partially reflects the light in a second propagation direction (520, 620, 720), in the beam path of which the projection optics (507, 607, 707, 807) are arranged and oriented in a direction in front of the vehicle, in order to form a light image in front of the vehicle,
wherein the controllable reflector (590, 690, 790) comprises an arrangement of a plurality of controllable individual mirrors (591, 691, 791, 592, 692, 792) whose reflecting surfaces are arranged in a non-tilted state planar in a first plane (550, 650, 750) and for example as a rectangular matrix of individual mirrors (191, 291),
wherein the light emitted by the light source unit (502, 602, 702) is incident on the controllable reflector (590, 690, 790) in the first propagation direction (510, 610, 710) and is reflected therefrom in a first driven state in the direction of the second propagation direction (520, 620, 720) and/or is reflected in a second driven state of the controllable reflector (590, 690, 790) in a third propagation direction (532, 632, 732), and
the optically transparent cover (504, 604, 704) is arranged in a second plane (551, 651, 751) between the light source unit (502, 602, 702) and the controllable reflector (590, 690, 790) such that light in the first propagation direction (510, 610, 710) and in the second propagation direction (520, 620, 720) is reflected off the optically transparent cover (504, 604, 704) in the first propagation direction (510, 610, 710) and in the second propagation direction (520, 620, 720) in the second propagation direction (520, 620, 720).
**characterized in that**
the light emitted by the light source unit (502, 602, 702) is incident on the optically transparent cover (504, 604, 704) in the first propagation direction (510, 610, 710) and is partially reflected by the latter in a fourth propagation direction (540, 640, 740) and is blocked in the fourth propagation direction (540, 640, 740) by the optical shading element (506, 606, 706), the shading element (506, 606, 706) being arranged at least partially in the beam path of the second propagation direction (520, 620, 720) and downstream of the projection optics (507, 607, 707, 807).

2. Vehicle headlight (101) according to claim 1, **characterized in that** in the third propagation direction (532, 632, 732) the optical absorber device (505, 605, 705) is located.

3. Vehicle headlight (101) according to claim 1 or 2, **characterized in that** the second plane (551, 651, 751) is parallel to the first plane (550, 650, 750).

4. Vehicle headlight (201) according to claim 1 or 2, **characterized in that** the second plane (551, 651, 751) lies at a third angle (γ7) to the first plane (550, 650, 750), wherein the third angle (γ7) is greater than 0° and smaller than 15°, preferably greater than 0° and smaller than 5°.

5. Vehicle headlamp (501, 601, 701) according to any one of claims 1 to 4, **characterized in that** the shading element (506, 606, 706) is arranged at least partially in the beam path of the second propagation direction (520, 620, 720) and in front of the projection optics (507, 607, 707, 807).

6. Vehicle headlamp (501, 601, 701) according to any one of claims 1 to 5, **characterized in that** the shading element (506, 606, 706) is a diaphragm which is designed as a field-of-view diaphragm.

7. Vehicle headlamp (501, 601, 701) according to any one of claims 1 to 5, **characterized in that** the shading element (506, 606, 706) is an optical absorber.

8. Vehicle headlamp (501, 601, 701) according to any one of claims 1 to 7, **characterized in that** the shading element (506, 606, 706) and the optical absorber device (505, 605, 705) are designed as a common component.

9. Vehicle headlamp (501, 601, 701) according to any one of claims 1 to 8, **characterized in that** the light emitted by the light source unit (502, 602, 702) in the first propagation direction (510, 610, 710) is incident on the optically transparent cover (504, 604, 704) at a first angle (α5, α6, α7), wherein the first angle (α5, α6, α7) is in a range between 50° and 65°, preferably between 55° and 60°.

10. Vehicle headlamp (501, 601, 701) according to any one of claims 1 to 9, **characterized in that** the light source unit (502, 602, 702) comprises at least one semiconductor light source, preferably a power LED, a high-current LED or a laser diode, and preferably a primary optics (103, 203) in the form of an optical lens.

## Revendications

1. Projecteur de véhicule (501, 601, 701) comprenant au moins une unité de source lumineuse (502, 602, 702), au moins un réflecteur commandable (590, 690, 790), au moins un cache optiquement transparent (504, 604, 704), au moins un dispositif d'absorption optique (505, 605, 705), au moins un élément d'occultation optique (506, 606, 706) et au moins une optique de projection (507, 607, 707, 807),
l'unité de source lumineuse (502, 602, 702) étant agencée pour émettre de la lumière et pour éclairer dans une première direction de propagation (510, 610, 710), dans le trajet des rayons de laquelle est disposé le réflecteur commandable (590, 690, 790), et le réflecteur commandable (590, 690, 790) réfléchit au moins partiellement la lumière dans une deuxième direction de propagation (520, 620, 720), dans le trajet des rayons de laquelle l'optique de projection (507, 607, 707, 807) est disposée et est orientée dans une direction devant le véhicule, afin de former une image lumineuse devant le véhicule,
dans lequel le réflecteur contrôlable (590, 690, 790) comprend un agencement d'une pluralité de miroirs individuels contrôlables (591, 691, 791, 592, 692, 792) dont les surfaces réfléchissantes, dans un état non incliné, sont disposées de manière plane dans un premier plan (550, 650, 750) et par exemple sous forme de matrice rectangulaire de miroirs individuels (191, 291),
dans lequel la lumière émise par l'unité de source lumineuse (502, 602, 702) est incidente sur le réflecteur contrôlable (590, 690, 790) dans la première direction de propagation (510, 610, 710) et est réfléchie par celui-ci dans un premier état commandé dans la direction de la deuxième direction de propagation (520, 620, 720) et/ou est réfléchie dans une troisième direction de propagation (532, 632, 732) dans un deuxième état commandé du réflecteur contrôlable (590, 690, 790), et
le couvercle optiquement transparent (504, 604, 704) est disposé dans un deuxième plan (551, 651, 751) entre l'unité de source lumineuse (502, 602, 702) et le réflecteur contrôlable (590, 690, 790) de telle sorte que la lumière dans la première direction de propagation (510, 610, 710) et dans la deuxième direction de propagation (520, 620, 720) traverse le couvercle optiquement transparent (504, 604, 704).
**caractérisé en ce que**
la lumière émise par l'unité de source lumineuse (502, 602, 702) tombe sur le couvercle optiquement transparent (504, 604, 704) dans la première direction de propagation (510, 610, 710) et est partiellement réfléchie par celui-ci dans une quatrième direction de propagation (540, 640, 740) et est bloquée dans la quatrième direction de propagation (540, 640, 740) par l'élément d'occultation optique (506, 606, 706), l'élément d'occultation (506, 606, 706) est disposé au moins partiellement dans le trajet du faisceau de la deuxième direction de propagation (520, 620, 720) et après l'optique de projection (507, 607, 707, 807).

2. Projecteur de véhicule (101) selon la revendication 1, **caractérisé en ce que** le dispositif d'absorption optique (505, 605, 705) est situé dans la troisième direction de propagation (532, 632, 732).

3. Projecteur de véhicule (101) selon la revendication 1 ou 2, **caractérisé en ce que** le deuxième plan (551, 651, 751) est parallèle au premier plan (550, 650, 750).

4. Projecteur de véhicule (201) selon la revendication 1 ou 2, **caractérisé en ce que** le deuxième plan (551, 651, 751) est situé à un troisième angle (γ7) par rapport au premier plan (550, 650, 750), le troisième angle (γ7) étant supérieur à 0° et inférieur à 15°, de préférence supérieur à 0° et inférieur à 5°.

5. Projecteur de véhicule (501, 601, 701) selon l'une des revendications 1 à 4, **caractérisé en ce que** l'élément d'occultation (506, 606, 706) est disposé au moins partiellement dans le trajet du faisceau de la deuxième direction de propagation (520, 620, 720) et en amont de l'optique de projection (507, 607, 707, 807).

6. Projecteur de véhicule (501, 601, 701) selon l'une des revendications 1 à 5, **caractérisé en ce que** l'élément d'occultation (506, 606, 706) est un diaphragme qui est conçu comme un diaphragme de champ visuel.

7. Projecteur de véhicule (501, 601, 701) selon l'une des revendications 1 à 5, **caractérisé en ce que** l'élément d'occultation (506, 606, 706) est un absorbeur optique.

8. Projecteur de véhicule (501, 601, 701) selon l'une des revendications 1 à 7, **caractérisé en ce que** l'élément d'occultation (506, 606, 706) et le dispositif d'absorption optique (505, 605, 705) sont réalisés sous la forme d'un composant commun.

9. Projecteur de véhicule (501, 601, 701) selon l'une des revendications 1 à 8, **caractérisé en ce que** la lumière émise par l'unité de source lumineuse (502, 602, 702) dans la première direction de propagation (510, 610, 710) tombe sur le cache optiquement transparent (504, 604, 704) sous un premier angle (α5, α6, α7), le premier angle (α5, α6, α7) étant compris dans une plage de 50° à 65°, de préférence de 55° à 60°.

10. Projecteur de véhicule (501, 601, 701) selon l'une quelconque des revendications 1 à 9, **caractérisé en ce que** l'unité de source lumineuse (502, 602, 702) comprend au moins une source lumineuse à semi-conducteur, de préférence une LED de puissance, une LED à courant élevé ou une diode laser, et de préférence une optique primaire (103, 203) sous la forme d'une lentille optique.
